(19) Europäisches Patentamt

European Patent Office

Office européen des brevets

(11) **EP 0 899 802 A2**

(12) **EUROPEAN PATENT APPLICATION**

(43) Date of publication:
03.03.1999 Bulletin 1999/09

(51) Int. Cl.$^6$: **H01M 4/00**, G03B 15/05

(21) Application number: 98115085.7

(22) Date of filing: 11.08.1998

(84) Designated Contracting States:
**AT BE CH CY DE DK ES FI FR GB GR IE IT LI LU MC NL PT SE**
Designated Extension States:
**AL LT LV MK RO SI**

(30) Priority: **28.08.1997 JP 232709/97**

(71) Applicant:
**Matsushita Electric Industrial Co., Ltd.**
**Kadoma-shi, Osaka 571-0050 (JP)**

(72) Inventors:
• **Noya, Shigeto**
  **Neyagawa City, 572-0048 (JP)**
• **Shoji, Yasuhiko**
  **Higashiosaka City, 579-8004 (JP)**

• **Hoshina, Yasuko**
  **Hirakata City, 573-1121 (JP)**
• **Wada, Seiji**
  **Katano City, 576-0021 (JP)**
• **Mototani, Yuji**
  **Yawata City, 614-8057 (JP)**

(74) Representative:
**Jung, Elisabeth, Dr.**
**Patentanwälte,**
**Dr. Elisabeth Jung,**
**Dr. Jürgen Schirdewahn,**
**Claus Gernhardt,**
**Postfach 40 14 68**
**80714 München (DE)**

(54) **Lens-fitted photographic film package**

(57) The present invention provides a lens-fitted photographic film package, which prevents a photographic film set in the sealed and wrapped film package from being deteriorated by gaseous hydrogen leaked from a battery and ascertains the more excellent stroboscopic properties than those of a conventional LR6 alkaline dry battery. The lens-fitted photographic film package comprises an unexposed photographic film (18), a shooting mechanism, a stroboscope (23), and a power-source battery (1) that supplies electric power to the stroboscope, wherein the battery is an alkaline battery prepared by adding nickel oxyhydroxide to a cathode mixture mainly composed of manganese dioxide and a conductive material.

FIG. 3

EP 0 899 802 A2

**Description**

BACKGROUND OF THE INVENTION

The present invention relates to a lens-fitted photographic film package with a stroboscope incorporated therein.

As disclosed in Japanese Examined Patent Publication No. Hei 2-32615, for example, the lens-fitted photographic film package has an unexposed photographic film accommodated in a package main body with a simple shooting mechanism, and is widely used because of its simple handling and low cost.

The lens-fitted photographic film package with a stroboscope incorporated therein is required to include a power source battery for supplying electricity to the stroboscope. Available examples of the power source battery include a manganese dry battery, an alkaline dry battery, and a lithium primary battery; one LR6 alkaline dry battery having the rated output voltage of 1.5 V is generally used by considering the battery performance (the supply of electric power per unit time), the cost, the availability, and the handling properties.

The lens-fitted photographic film package is sealed in an aluminum-depositing film as a wrapping material having a high sealing ability and laid out for sale, for the purpose of protecting a photographic film from the humidity. When even a little amount of gaseous hydrogen produced by the self discharge of zinc is leaked from the alkaline dry battery, the gaseous hydrogen remains in the sealed aluminum-depositing film and causes deterioration of a new photographic film. One proposed technique forms a minute non-through hole in the wrapping material to prevent gaseous hydrogen from remaining (for example, Japanese Laid-Open Patent Publication No. Hei 8-122980).

As the power source battery of the lens-fitted photographic film package with a stroboscope incorporated therein, one LR6 alkaline dry battery may, however, be insufficient for the required supply of electric power per unit time. This is because of the following reason. It takes approximately 5 seconds even for the first time and approximately 8 seconds for the 30-th time to fully charge a main capacitor for the stroboscope prior to the stroboscopic photography; you may accordingly miss the good shutter chance. One proposed structure uses an integral battery unit including two cells, which have the same diameter as that of the LR6 battery having the rated output voltage of 1.5 V and the length of 25 mm ± 2 mm and are connected in series, as the power source battery of the lens-fitted photographic film package with a stroboscope incorporated therein, in order to shorten the time required for the stroboscopic photography (for example, Japanese Laid-Open Patent Publication No. Hei 6-266055).

The unique characteristic of the lens-fitted photographic film package is the compactness, so that further size and weight reduction is desirable. One proposed technique for that purpose devises the connection of the batteries and reduces the volume of a battery accommodating unit (for example, Japanese Laid-Open Patent Publication No. Hei 7-22015). The battery, however, occupies a large space in the package and adds a significant weight to the package, which interferes with the desirable compactness of the package; development of an inexpensive, small-sized, high-performance power source battery has thus been highly demanded. Development of such a power source battery enables addition of a simplified auto-focusing unit and a film winder unit in order to improve the functions of the lens-fitted photographic film package.

BRIEF SUMMARY OF THE INVENTION

One object of the present invention is thus to provide a lens-fitted photographic film package, which prevents a photographic film set in the sealed and wrapped film package from being deteriorated by gaseous hydrogen leaked from a battery and ascertains the more excellent stroboscopic properties than those of a conventional LR6 alkaline dry battery.

Another object of the present invention is to provide a lens-fitted photographic film package with a stroboscope incorporated therein, which includes a LR03 alkaline battery having a greater supply of electric power per unit time than that of the conventional LR6 alkaline dry battery.

The present invention provides a lens-fitted photographic film package comprising an unexposed photographic film, a shooting mechanism, a stroboscope, and a power-source battery that supplies electric power to the stroboscope, wherein the battery is an alkaline battery comprising a cathode mixture mainly composed of manganese dioxide and a conductive material and wherein the mixture contains nickel oxyhydroxide.

In a preferred mode of the present invention, the content of the nickel oxyhydroxide is 2 to 100 parts by weight per 100 parts by weight of the manganese dioxide. In a more preferred mode of the present invention, the content of the nickel oxyhydroxide is 5 to 50 parts by weight per 100 parts by weight of the manganese dioxide.

It is also preferable that the alkaline battery is LR03.

The present invention uses an alkaline battery, which is prepared by adding nickel oxyhydroxide to a cathode mixture mainly composed of manganese dioxide and a conductive material, as the power source battery for supplying electricity to a stroboscope in a lens-fitted photographic film package. Nickel oxyhydroxide has an ability of absorbing gaseous hydrogen as expressed by the following equation:

$$NiOOH + 1/2H_2 \rightarrow Ni(OH)_2$$

(M. Ikoma, Y. Hoshina, I. Matsumoto, and C. Iwakura, J.Electrochem.Soc., 143,1904 (1996)), so that the addition of nickel oxyhydroxide as the hydrogen absorbent to the cathode mixture gives the alkaline battery itself the ability of absorbing gaseous hydrogen evolved within the battery.

The addition of nickel oxyhydroxide enhances the output voltage of the alkaline battery and thereby increases the supply of electric power per unit time to the stroboscope. This arrangement enables even the LR03 alkaline battery to require the shorter time for stroboscopic photography, that is, for completing the charge of the main capacitor, compared with the lens-fitted photographic film package with a stroboscope incorporated therein, which uses the conventional LR6 alkaline dry battery.

As described above, the present invention prevents the photographic film in the sealed and wrapped film package from being deteriorated by gaseous hydrogen and gives the better stroboscopic properties to the LR03 alkaline battery than those of the conventional LR6 cell, which results in reducing the size and the weight of the film package. This arrangement also enables addition of the new functions, such as an auto-focusing unit and a film winder unit, to the film package.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

Fig. 1 is a partly sectional front view illustrating the essential structure of a cylindrical alkaline battery used for examples of the present invention.

Fig. 2 is a perspective view illustrating a lens-fitted photographic film package embodying the present invention.

Fig. 3 is a bottom view illustrating an essential part of the film package.

Fig. 4 is a graph showing the relationship between the frequency of charging and the charging time of a stroboscope by various batteries.

DETAILED DESCRIPTION OF THE INVENTION

The present invention will now be described in more detail with reference to the following specific, non-limiting examples.

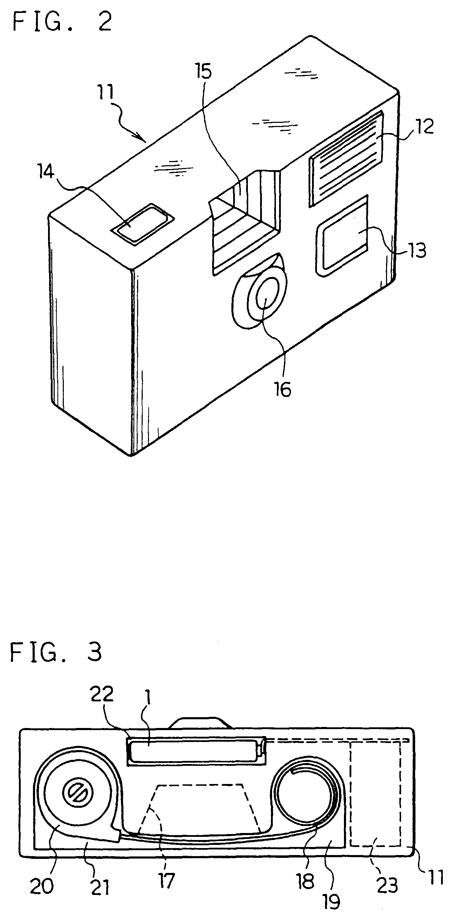

Fig. 2 is a perspective view illustrating a lens-fitted photographic film package using the alkaline battery of the present invention, and Fig. 3 is a bottom view illustrating the film package with a bottom plate omitted.

A package main body 11 is a plastic molded product and includes a film cartridge, a shooting mechanism with a shutter and a film advancing mechanism, a stroboscope, and a power source battery thereof. The package main body is covered with a paper box having openings that allow a flash head 12, a strobe-charging switch 13, a shutter release 14, a finder 15, and a lens 16 to be exposed to the outside.

An exposure chamber 17 for film exposure is disposed at a position corresponding to the lens 16 inside the package main body 11; a roll chamber 19 is located on one side of the exposure chamber to accommodate a roll of photographic film 18 therein whereas a cartridge chamber 21 is located on the other side of the exposure chamber to receive a cartridge 20 having a core to which one end of the film is fixed. The film exposed in the exposure chamber after every shot is wound on the core in the cartridge by operation of a film advance lever, which is not illustrated. A battery chamber 22 for accommodating an alkaline battery 1 therein is located below the exposure chamber 17, and the battery 1 and a stroboscope 23 are connected to a control circuit including a capacitor that is operated by the strobe-charging switch 13 and the shutter release 14.

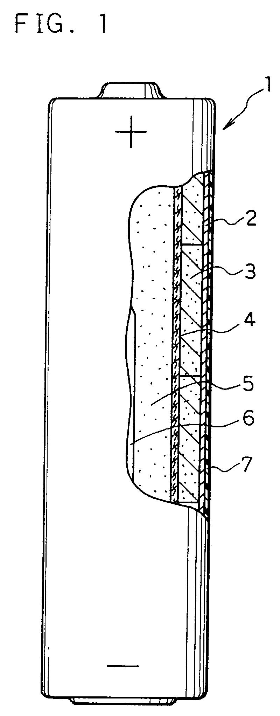

Fig. 1 illustrates the cylindrical alkaline battery 1. The battery has a cathode mixture 3 including manganese dioxide, a conductive material, and nickel oxyhydroxide, a separator 4, and a gel anode 5 including powdery zinc, a gelling agent, and an alkaline electrolyte, and a collector element 6 inserted in the anode, which are all placed in a metal case 2 functioning as a cathode terminal. A lower opening of the case 2 is sealed with a gasket, to which a bottom plate constituting a terminal of the collector element and an anode terminal is fixed. The side face and the periphery of the upper and the lower ends of the case 2 are covered with an jacket label 7 composed of a resin tube.

The cathode mixture 3 is generally prepared by forming a mixture of powdery manganese dioxide and powdery graphite at the weight ratio of 8 to 30 : 1 into pellets under the pressure.

Manganese dioxide and nickel oxyhydroxide were mixed at predetermined ratios shown in Table 1, and each mixture and powdery graphite were further mixed at the weight ratio of 15 : 1. These mixtures were formed into pellets under the pressure to give LR03 alkaline batteries having the structure shown in Fig. 1. Comparative Example 2 was a LR6 alkaline dry battery of the conventional structure prepared by using the same cathode mixture as Comparative Example 1.

In order to check these alkaline dry batteries for release of gaseous hydrogen, each battery was sealed in a special wrapping material for wrapping the lens-fitted photographic film package with a stroboscope incorporated therein, and kept at the temperature of 50°C for two weeks. Three milliliters of the gas that was present in the wrapping material were collected, and the concentration of hydrogen in the gas was analyzed by gas chromatography. The results of the analyses are also shown in Table 1.

Table 1

|  | Nickel oxyhydroxide (parts by weight / 100 parts by weight of manganese dioxide) | Concentration of hydrogen (%) |
|---|---|---|
| Comparative Example 1 | 0 | 0.09 |
| Example 1 | 2 | 0.03 |
| Example 2 | 5 | TR |
| Example 3 | 10 | TR |
| Example 4 | 50 | TR |
| Example 5 | 100 | TR |
| Comparative Example 2 | LR6 alkaline dry battery | 0.12 |
| (Note) TR: not greater than 0.01% | | |

Comparison between the conventional LR6 alkaline dry battery (Comparative Example 2) and LR03 alkaline dry battery (Comparative Example 1), neither of which contains nickel oxyhydroxide, in Table 1 shows the latter has the lower concentration of hydrogen included in the wrapping material, which is ascribed to the small size of the battery. Comparison between Comparative Example 1 and Examples 1 to 5, however, shows that addition of nickel oxyhydroxide to the alkaline batteries has the significant effect of absorbing gaseous hydrogen. Especially addition of at least 5 parts by weight of nickel oxyhydroxide to 100 parts by weight of manganese dioxide reduces the amount of detection to the tracing level.

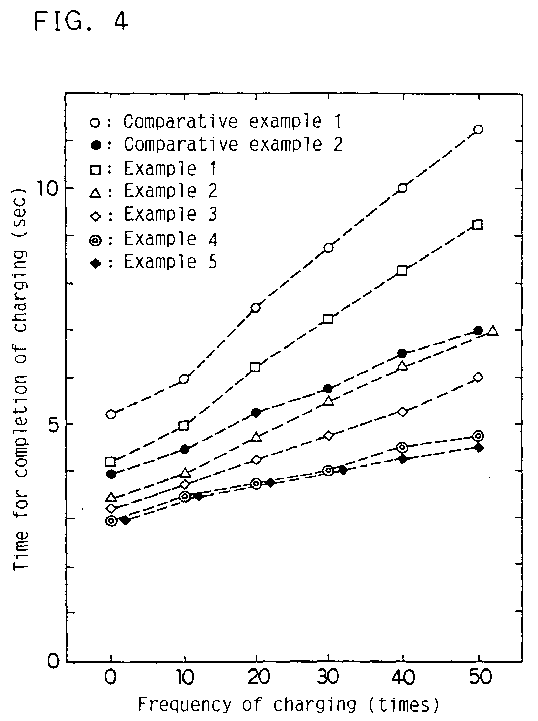

In order to measure the supply of electric power per unit time of these batteries of the present invention, each battery was set in the lens-fitted photographic film package with a stroboscope incorporated therein shown in Fig. 2, and the time period from a start of charging the stroboscope to its completion was measured repeatedly in succession. The results are shown in Fig. 4.

It is preferable to shorten the charging time required for stroboscopic photography as much as possible. In the graph of Fig. 4, the characteristic curve that is located at the lower position and has the gentler gradient has the better charging properties. In order to improve the charging performance than the conventional level, the LR03 alkaline batteries of the examples having the characteristic curves located below the characteristic curve of the LR6 alkaline dry battery of Comparative Example 2 should be selected. Comparative Example 1 is the LR03 alkaline dry battery without nickel oxyhydroxide, and comparison with Comparative Example 2 shows that the simple battery reduction of the battery worsens the charging performance.

Step-wise increase in mixing ratio of nickel oxyhydroxide from 2 to 100 parts by weight per 100 parts by weight of manganese dioxide improves the charging performance as clearly understood from Fig. 4. The LR03 batteries (Examples 2 to 5), in which at least 5 parts by weight of nickel oxyhydroxide are added to 100 parts by weight of manganese dioxide, have the better properties than those of the conventional LR6 alkaline dry battery. Comparison between Examples 4 and 5 shows that addition of more than 50 parts by weight of nickel oxyhydroxide to 100 parts by weight of manganese dioxide does not further improve the charging properties. It is accordingly sufficient that the LR03 alkaline battery of the present invention contains 5 to 50 parts by weight of nickel oxyhydroxide per 100 parts by weight of manganese dioxide.

Although the pre-mixture of manganese dioxide and nickel oxyhydroxide was mixed with powdery graphite at the weight ratio of 15 : 1 in the above-mentioned examples, the similar effects are obtained at the weight ratio of 8 to 30

: 1.

The similar effects are also obtained when silver oxide or silver peroxide is used in place of manganese dioxide. It is, however, a matter of course that these batteries are not inexpensive as the power source battery of the lens-fitted photographic film package.

As described above, the present invention provides a lens-fitted photographic film package that prevents a photographic film in the sealed and wrapped film package from being deteriorated by gaseous hydrogen and has the more excellent stroboscopic properties than those of the conventional LR6 alkaline dry battery. This arrangement enables size and weight reduction of the whole film package and addition of new functions to the film package.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A lens-fitted photographic film package, comprising an unexposed photographic film (18), a shooting mechanism, a stroboscope (23), and a power-source battery (1) that supplies electric power to said stroboscope, wherein said battery (1) is an alkaline battery comprising a cathode mixture (3) mainly composed of manganese dioxide and a conductive material and wherein said mixture contains nickel oxyhydroxide.

2. A lens-fitted photographic film package in accordance with claim 1, wherein a content of the nickel oxyhydroxide is 2 to 100 parts by weight per 100 parts by weight of the manganese dioxide.

3. A lens-fitted photographic film package in accordance with claim 2, wherein the content of the nickel oxyhydroxide is 5 to 50 parts by weight per 100 parts by weight of the manganese dioxide.

4. A lens-fitted photographic film package in accordance with claim 3, wherein said alkaline battery is LR03.

FIG. 1

FIG. 2

FIG. 3

FIG. 4